**Europäisches Patentamt**

**European Patent Office**

**Office européen des brevets**

(19)

(11) Veröffentlichungsnummer: **0 033 887**
**B1**

(12) # EUROPÄISCHE PATENTSCHRIFT

(45) Veröffentlichungstag der Patentschrift:
27.07.83

(21) Anmeldenummer: 81100549.5

(22) Anmeldetag: 27.01.81

(51) Int. Cl.³: **C 03 B 33/09**

(54) **Verfahren zum Zerteilen von massiven Gegenständen aus sprödbrechendem Material, wie z.B. Glas.**

(30) Priorität: 31.01.80 DE 3003383

(43) Veröffentlichungstag der Anmeldung:
19.08.81 Patentblatt 81/33

(45) Bekanntmachung des Hinweises auf die Patenterteilung:
27.07.83 Patentblatt 83/30

(84) Benannte Vertragsstaaten:
AT BE CH DE FR GB IT LI NL SE

(56) Entgegenhaltungen:
DE-A-2 813 304
DE-C-1 030 530

(73) Patentinhaber: **Fraunhofer-Gesellschaft zur Förderung der angewandten Forschung e.V., Leonrodstrasse 54, D-8000 München 19 (DE)**

(72) Erfinder: **Stahn, Dieter, Dipl.-Phys., Steinhalde 112, D-7800 Freiburg-Ebnet (DE)**
Erfinder: **Jüngling, Manfred, Hansjakobstrasse 24, D-7800 Freiburg (DE)**
Erfinder: **Döll, Walter, Dr.-Ing., Steinstrasse 4, D-7801 Reute (DE)**

(74) Vertreter: **Kraus, Walter, Dr. et al, Patentanwälte Dres. Kraus & Weisert Irmgardstrasse 15, D-8000 München 71 (DE)**

BUNDESDRUCKEREI BERLIN

### Verfahren zum Zerteilen von massiven Gegenständen aus sprödbrechendem Material, wie z. B. Glas

Die Erfindung betrifft ein Verfahren zum Zerteilen von massiven Gegenständen aus sprödbrechendem Material, wie z. B. Glas, gemäß dem Oberbegriff des Anspruchs 1, wie es aus der DE-A-2 813 304 bekannt ist.

In der DE-A-2 813 304 über das »Zerteilen von quaderförmigen Blöcken aus Glas« durch Halbieren parallel zu einem Paar von Grundflächen mit Hilfe von thermisch induzierten Spannungen wird darauf hingewiesen, daß es grundsätzlich unvermeidbar ist, daß bei einem durch Kühlung eingeleiteten Zerteilen der angeritzten Blöcke ein Teil der vorgesehenen Trennfläche zunächst unzertrennt bleibt. Dies folgt aus dem Prinzip des Kräftegleichgewichts. In der unzertrennten Restfläche liegen nämlich während der Kühlung Druckspannungen vor, welche denjenigen Zugspannungen, die im übrigen Teil der vorgesehenen Trennfläche das Spalten bewirken, die Waage halten.

Das Zerteilen der Blöcke längs dieser Restfläche in der vorgesehenen Trennebene wird nach der DE-A-2 813 304 durch einen weiteren thermischen Verfahresnschritt, nämlich dadurch erreicht, daß die Blöcke im Anschluß an den Kühlvorgang über ihre Oberflächen erwärmt werden.

Bei Anwendungen des genannten Verfahrens hat sich allerdings herausgestellt, daß solche Bedingungen, unter denen die Trennung der Restfläche anforderungsgemäß — nämlich in der vorgesehenen Trennebene — verläuft, bei bestimmten Geometrieverhältnissen der zu zerteilenden Gegenstände nur schwierig zu erzeugen sind, da hier für die thermischen Verfahrensparameter jeweils nur ein enger Bereich mit günstigen Werten zur Verfügung steht.

Der vorliegenden Erfindung liegt die Aufgabe zugrunde, massive Gegenstände aus sprödbrechendem Material, deren Gestalt (mindestens) eine Symmetrieebene hat, durch Halbieren entlang der Symmetrieebene mit Hilfe von thermisch induzierten Spannungen zu zerteilen, so daß die Nachteile der bisher bekannten thermischen Spaltungsverfahren vermieden werden. Diese Aufgabe wird erfindungsgemäß durch ein Verfahren nach dem kennzeichnenden Teil des Patentanspruchs 1 gelöst; weitere vorteilhafte Ausgestaltungen des Verfahrens sind in den Unteransprüchen angegeben.

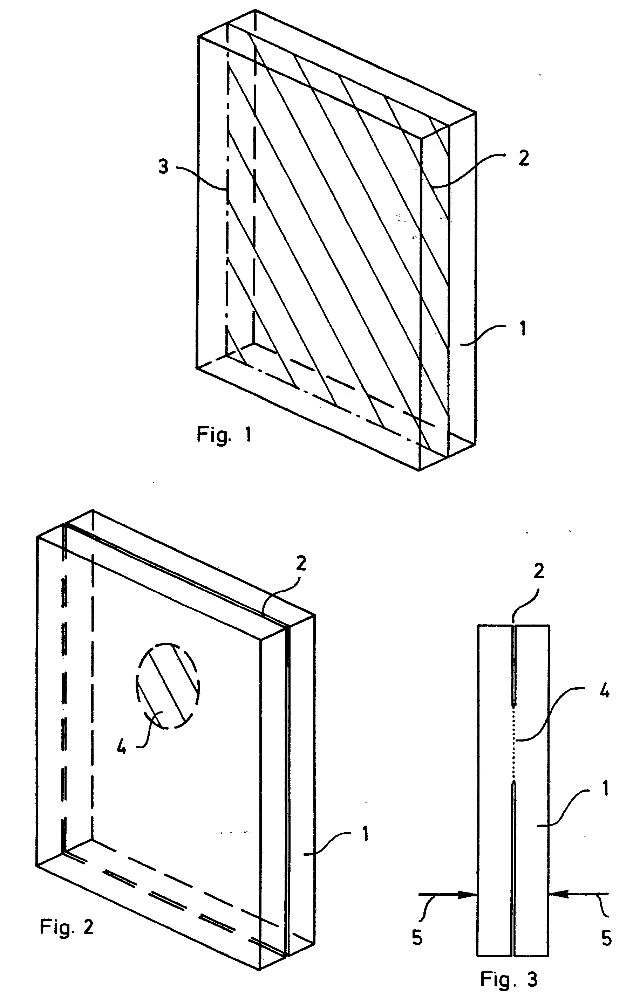

Um das Werkstück, wie der zu bearbeitende massive Gegenstand mit den angegebenen Eigenschaften (Werkstoff mit sprödem Materialverhalten, Spiegelsymmetrie der Gestalt) im folgenden kurz genannt werden soll, zu zerteilen, sieht das Verfahren als ersten Schritt die an sich bekannte Erzeugung einer Schwachstelle vor, an der später der Trennvorgang eingeleitet wird. Im vorliegenden Fall soll hierfür die von der Symmetrieebene und der Oberfläche des Werkstücks gebildete Schnittlinie möglichst in voller Länge angeritzt werden, da eine umlaufende Kerblinie beim anschließenden Spalten zugleich eine gewisse Führung ausübt. Die perspektivische Darstellung in Fig. 1 zeigt ein Werkstück 1 mit einer solchen, in einer Symmetrieebene 2 des Werkstücks verlaufenden geschlossenen Kerblinie 3.

Um das Werkstück 1 entlang der Symmetrieebene 2 zu zerteilen, muß die Verteilung der das Material trennenden Spannungen symmetrisch zu dieser Ebene sein. Dies wird durch Aufbringen von zur vorgesehenen Trennebene 2 symmetrischen Temperaturänderungen erreicht. Eine Grundvoraussetzung dafür, daß sich dabei Wärmespannungen ausbilden können — daß nämlich das Material bei Temperaturänderungen Wärmedehnungen zeigt —, ist normalerweise immer erfüllt. Wärmespannungen treten auf, wenn die aus unterschiedlichen Temperaturen resultierenden unterschiedlichen Dehnungen des Materials sich gegenseitig behindern.

Im zweiten Verfahrensschritt wird das angeritzte Werkstück in an sich bekannter Weise möglichst symmetrisch zur vorgesehenen Trennebene gekühlt. Dies bewirkt eine Kontraktion seiner gekühlten, oberflächennahen Bereiche, die jedoch durch den noch warmen Innenbereich behindert wird. Dadurch geraten das gekühlte Äußere des Werkstücks bis in eine gewisse Tiefe unter Zug, das Innere hingegen unter Druck. Erfolgt die Kühlung mit geeignet bemessener Intensität und zeitlicher Dauer, so wird das Werkstück entlang der vorgesehenen Trennebene bis auf eine Restfläche getrennt. Dies vollzieht sich in solcher Weise, daß ein Riß von der Kerblinie (oder einem Teilstück davon) auf der Oberfläche ausgeht und sich — vereinfacht ausgedrückt — über diejenigen Bereiche der vorgesehenen Trennfläche ausdehnt, in denen sich senkrecht zum Riß Zugspannungen ausbilden. Daß das Werkstück dabei in der vorgesehenen Trennfläche zunächst nicht vollständig getrennt wird, ist — wie schon erwähnt — grundsätzlich bedingt und geht darauf zurück, daß in der Restfläche gemäß dem Prinzip des Kräftegleichgewichts während der Kühlung Druckspannungen vorliegen.

Um das Werkstück längs dieser Restfläche in der vorgesehenen Trennebene zu zerteilen, müssen in der Restfläche an Stelle von Druckspannungen zur Fläche senkrechte Zugspannungen erzeugt werden. Die Erfindung sieht vor, daß hierfür vorteilhafterweise der bereits eingeleitete thermische Verfahrensschritt der Kühlung (oder ein gleichartiger Verfahrensschritt) ausgenutzt wird. Dies führt jedoch nach dem obigen allein nicht zum Ziel, denn in der Restfläche können keine Zugspannungen entstehen, wenn im übrigen Teil der vorgesehenen Trennfläche kein Zusammenhalt mehr zwischen den beiden Werkstückhälften besteht. Die Erfindung sieht daher als neuen, dritten Verfahrensschritt vor, daß der Zusammenhalt ersatzweise durch eine äußere Einwirkung hergestellt wird. Zu diesem Zweck werden während des Kühlvorganges zwei einander entgegengerichtete, gleich große Druckkräfte mit übereinstimmender Wirkungslinie an solchen Stellen außen an dem Werkstück senkrecht zur vorgesehenen Trennebene aufgebracht, daß sich ihre Wirkung in der vorgesehenen Trennebene im wesentlichen auf ein Gebiet außerhalb der nicht zertrennten Restfläche konzentriert.

Zur Verdeutlichung zeigt Fig. 2 ein durch symmetrisches Kühlen bereits großenteils — bis auf die Restfläche 4 — gespaltenes Werkstück 1 und Fig. 3 eine Seitenansicht davon, und zwar im Schnitt durch die Werkstückmitte, wobei die gegenüber Fig. 2 zusätzlichen Pfeile 5 die am Werkstück 1 außen angelegten Druckkräfte bedeuten.

Sofern die Kühlung mit geeignet bemessener Intensität und zeitlicher Dauer erfolgt und sofern der Ort und Zeitpunkt für das Aufbringen der äußeren Druckkräfte 5 geeignet gewählt sind, wird das Werkstück 1 längs der Restfläche 4 in der vorgesehenen Trennebene 2 zerteilt; es kann nach Entfernen der äußeren Druckkräfte 5 in Hälften auseinander genommen werden.

Die technische Maßnahme des dritten Verfahrensschrittes — das Aufbringen von äußeren Druckkräften — ist für sich betrachtet an sich aus der DE-A-2 813 304 bekannt; neu dagegen ist ihr mit einem Kühlvorgang kombinierter Einsatz für das Ziel, die zuvor durch die Kühlung eingeleitete Spaltung eines Werkstücks anforderungsgemäß zu vollenden.

Zur Erleichterung der technischen Durchführung des Verfahrens kann es vorteilhaft sein, dieses in solcher Weise abzuwandeln, daß die äußeren Druckkräfte 5 an dem zu zerteilenden Werkstück 1 während einer Unterbrechung des Kühlvorganges aufgebracht werden. Allerdings kann hierbei eintreten, daß nach der Unterbrechung eine Temperatur des Kühlmediums wie zu Beginn des Kühlvorganges nicht mehr genügt, um die Trennung des Werkstücks 1 entlang der Restfläche 4 zu bewirken. Diese Möglichkeit läßt sich vermeiden, indem man dafür sorgt, daß die Temperatur des Kühlmediums bei der zweiten Kühlung niedriger als bei der ersten ist, was z. B. mit Hilfe zweier Kühlbäder oder auch eines speziellen Kühlbades mit einem Temperaturgradienten innerhalb des Kühlmediums erreicht werden kann. Als anderer Ausweg bietet sich unter Umständen eine Erwärmung des Werkstücks während der Unterbrechung des Kühlvorganges an. In diesem Fall soll — im Unterschied zur DE-A-2 813 304 — die Erwärmung des Werkstücks jedoch keine Fortsetzung der Spaltung bewirken, um eventuelle Nachteile daraus auszuschließen. Die Erwärmung soll möglichst symmetrisch zur vorgesehenen Trennebene erfolgen, damit Störungen auf Grund von unsymmetrischen Temperaturverteilungen vermieden werden. Alternativ zu einer erzwungenen Wärmezufuhr, z. B. durch Eintauchen und zeitweiliges Belassen in der Flüssigkeit eines Erwärmungsbades, kommt auch ein freier Wärmeaustausch des gekühlten Werkstücks mit der Umgebung in Betracht.

Daneben kann es für die technische Durchführung des Verfahrens vorteilhaft sein, wenn die Ausgangstemperatur des zu zerteilenden Werkstücks höher als die Raumtemperatur ist. Eine höhere Ausgangstemperatur läßt sich durch Erwärmen erreichen oder liegt schon, z. B. bedingt durch die Herstellung des Werkstücks, von vornherein vor. Mindestens im zweiten Fall muß dann der Verfahrensschritt des Aufbringens einer Kerblinie auf der Oberfläche des Werkstücks bei der höheren Temperatur ausgeführt werden.

In einer besonders günstigen Ausführungsform des Verfahrens wird die Kühlung des Werkstücks durch rasches Eintauchen und zeitweiliges Belassen in der Flüssigkeit eines Kühlbades erzielt; hier genügt schon eine relativ niedrige Temperaturdifferenz, um die zum Spalten erforderlichen Spannungen zu erzeugen.

Das Verfahren kann überdies dadurch günstig ausgestaltet werden, daß der zeitliche Ablauf des Trennvorganges an dem zu zerteilenden Werkstück durch optische Einrichtungen, z. B. Videokamera, Lichtschranken usw., beobachtet wird; die dabei erhältlichen Informationen über Größe und Lage der noch unzertrennten Restfläche ermöglichen eine Steuerung bei der Wahl von Ort und Zeitpunkt für das Aufbringen der äußeren Druckkräfte.

Vorteile der Erfindung sind vor allem die Einfachheit des Verfahrens und seiner Anwendung, der geringe Aufwand an technischen Mitteln und die relativ kurze Dauer des Bearbeitungsprozesses. Das Verfahren liefert ebene, glatte Trennflächen, so daß in vielen Fällen eine nur geringe Nachbearbeitung erforderlich ist. Werkzeugverschleiß wird weitgehend vermieden. Das Verfahren ermöglicht einen sauberen Arbeitsplatz mit geringer Umweltbelastung, da Glasstaub, Splitter, Lärm usw. praktisch nicht auftreten.

In einem ersten Ausführungsbeispiel wurde eine Glasplatte mit den Abmessungen $150 \times 150 \times 26$ mm³ mit einer umlaufendn Kerblinie versehen und in Hälften von $150 \times 150 \times 13$ mm³ zerteilt. Hierbei wurde zunächst durch Eintauchen der Platte in eine Kühlflüssigkeit mit einer Temperatur von 213 K eine Temperaturdifferenz von 82 K aufgebracht. Die Verweilzeit der Platte im Bad betrug 45 s. Während einer anschließenden kurzen Unterbrechung des Kühlvorganges wurden an der inzwischen teilweise gespaltenen Platte mit Hilfe einer Schraubzwinge — wie beschrieben — äußere Druckkräfte angelegt. Dann wurde die Kühlung der Platte weitere 15 s lang fortgesetzt, worauf ihre Halbierung vollendet war.

In einem weiteren Ausführungsbeispiel wurde ein $140 \times 140 \times 70$ mm³ großer quaderförmiger Glasblock mit einer umlaufenden Kerblinie versehen und in Hälften von $140 \times 140 \times 35$ mm³

zerteilt. Die bei der ersten Kühlung in einem Kühlbad (Temperatur 223 K) aufgebrachte Temperaturdifferenz betrug 70 K, die Kühlung dauerte 40 s. Anschließend wurde der Glasblock etwa 300 s lang in Wasser auf eine Temperatur von 288 K erwärmt. Nach dem Aufbringen äußerer Druckkräfte – wie beschrieben – mit Hilfe einer Schraubzwinge wurde der so beaufschlagte Glasblock für 20 s erneut in das Kühlbad getaucht.

In einem dritten Ausführungsbeispiel wurde ein quaderförmiger Glasblock ($75 \times 75 \times 40$ mm³) in der Mitte seiner Höhe mit einer umlaufenden Kerblinie versehen, in Wasser auf eine Ausgangstemperatur von 366 K gebracht und anschließend für die Dauer von 40 s in Wasser von 292 K eingetaucht. Nach dem Aufbringen äußerer Druckkräfte – wie beschrieben – mit Hilfe einer Schraubzwinge wurde der so beaufschlagte Glasblock während eines 20 s langen Eintauchens in eine Kühlflüssigkeit mit einer Temperatur von 253 K endgültig halbiert.

## Patentansprüche

1. Verfahren zum Zerteilen von massiven Gegenständen (1) aus sprödbrechendem Material, wie z. B. Glas, deren Gestalt (mindestens) eine Symmetrieebene hat, durch Halbieren entlang der die Trennebene (2) bildenden Symmetrieebene mit Hilfe von thermisch induzierten Spannungen, wobei zunächst eine Materialschwächung in Form einer Kerblinie (3) auf der Oberfläche der Gegenstände (1) an der vorgesehenen Trennebene (2) erzeugt wird und wobei dann die Gegenstände (1) symmetrisch zur Trennebene (2) gekühlt werden, so daß sie durch hierbei entstehende Wärmespannungen – ausgehend von der Kerblinie (3) oder einem Teilstück davon – in der Trennebene (2) bis auf eine Restfläche (4) getrennt werden, dadurch gekennzeichnet, daß anschließend an diese teilweise Spaltung zur Spaltung der Gegenstände (1) längs der Restfläche (4) in der vorgesehenen Trennebene (2) während des Kühlvorganges oder während einer Unterbrechung desselben zwei einander entgegengerichtete, gleich große Druckkräfte (5) mit übereinstimmender Wirkungslinie an solchen Stellen außen an den Gegenständen (1) senkrecht zu der Trennebene (2) aufgebracht werden, daß sich ihre Wirkung in der Trennebene (2) im wesentlichen auf ein Gebiet außerhalb der nicht zertrennten Restfläche (4) konzentriert.

2. Verfahren nach Anspruch 1, dadurch abgewandelt, daß die äußeren Druckkräfte (5) an den zu zerteilenden Gegenständen (1) während einer Unterbrechung des Kühlvorganges aufgebracht werden.

3. Verfahren nach Anspruch 1 oder 2, dadurch gekennzeichnet, daß die zu zerteilenden Gegenstände (1) nach dem Aufbringen der äußeren Druckkräfte (5) bei einer Temperatur des Kühlmediums gekühlt werden, die unter derjenigen zu Beginn des Kühlvorganges liegt.

4. Verfahren nach Anspruch 2 oder gegebenenfalls 3, dadurch gekennzeichnet, daß die zu zerteilenden Gegenstände (1) während der Unterbrechung des Kühlvorganges symmetrisch zur vorgesehenen Trennebene (2) erwärmt werden.

5. Verfahren nach einem der Ansprüche 1 bis 4, dadurch gekennzeichnet, daß die Ausgangstemperatur der zu zerteilenden Gegenstände (1) höher als die Raumtemperatur ist.

6. Verfahren nach Anspruch 5, dadurch gekennzeichnet, daß die Temperatur des Kühlmediums gleich oder etwa gleich der Raumtemperatur ist.

7. Verfahren nach einem der Ansprüche 1 bis 6, dadurch gekennzeichnet, daß die Kühlung der zu zerteilenden Gegenstände (1) durch Eintauchen und zeitweiliges Belassen in der Flüssigkeit eines Kühlbades erfolgt.

8. Verfahren nach einem der Ansprüche 1 bis 7, dadurch gekennzeichnet, daß der zeitliche Ablauf des Trennvorganges an den Gegenständen (1) durch optische Einrichtungen beobachtet wird und daß die dabei erhältlichen Informationen zur Festlegung von Ort und Zeitpunkt des Aufbringens der äußeren Druckkräfte (5) benutzt werden.

9. Verfahren nach einem der Ansprüche 1 bis 8, dadurch gekennzeichnet, daß die äußeren Druckkräfte (5) pneumatisch, hydraulisch oder durch Gewinde erzeugt werden, wobei die Einrichtungen zur Erzeugung dieser Druckkräfte (5) zugleich als Halterung der Gegenstände (1) ausgebildet sein können.

## Claims

1. A methode of dividing solid objects (1) of breakable material, for example glass, of which the geometry has (at least) one plane of symmetry by bisection along the plane of symmetry forming the dividing plane (2) by means of heat-induced stresses, the material first being weakened by a score line (3) applied to the surface of the objects (1) at the proposed dividing plane (2), after which the objects (1) are cooled symmetrically to the dividing plane (2) so that, starting from the score line (3) or a part thereof, they are split in the dividing plane (2) – apart from a residual area (4) – under the effect of the thermal stresses generated, characterised in that, after this partial splitting operation, the objects (1) are split along the residual area (4) in the proposed dividing plane (2) by the application during the cooling process or during an interruption therein of two oppositely directed compressive forces (5) of equal intensity acting along the same line to the outside of the objects (1) perpendicularly of the dividing plane (2) at such places that their effect in the dividing plane (2) is largely concentrated on an area outside the intact residual area (4).

2. A method as claimed in Claim 1 modified to the extent that the external compressive forces (5) are applied to the objects (1) to be divided during an interruption in the cooling process.

3. A method as claimed in Claim 1 or 2, characterised in that, following application of the external compressive forces (5), the objects (1) to be divided are cooled at a temperature of the cooling medium which is below that prevailing at the beginning of cooling.

4. A method as claimed in Claim 2 or optionally Claim 3, characterised in that the objects (1) to be divided are heated symmetrically to the proposed dividing plane (2) during the interruption in the cooling process.

5. A method as claimed in any of Claims 1 to 4, characterised in that the starting temperature of the objects (1) to be divided is higher than the ambient temperature.

6. A method as claimed in Claim 5, characterised in that the temperature of the cooling medium is equal or substantially equal to the ambient temperature.

7. A method as claimed in any of Claims 1 to 6, characterised in that the objects (1) to be divided are cooled by immersion for a while in the liquid of a cooling bath.

8. A method as claimed in any of Claims 1 to 7, characterised in that the progress of the operation by which the objects (1) are divided is monitored by optical instruments and in that the information obtained is used for determining the location and timing of the application of the external compressive forces (5).

9. A method as claimed in any of Claims 1 to 8, characterised in that the external compressive forces (5) are generated pneumatically, hydraulically or by screwthread, the means by which they are generated also being capable of acting as a holder for the objects (1).

**Revendications**

1. Procédé pour couper des objets massifs (1) en matériaux fragiles, comme par exemple du verre, dont la forme a (au moins) un plan de symétrie, par partage en deux le long du plan de symétrie formant la surface de séparation (2), à l'acide de tensions induites thermiquement, dans lequel on crée tout d'abord un affaiblissement du matériau sous la forme d'une ligne d'entaille (3) sur la surface des objets (1), dans le plan de séparation (2) prévu et dans lequel les objets (1) sont alors refroidis symétriquement par rapport au plan de séparation (2), de sorte qu'ils sont séparés par les tensions thermiques qui en résultent — en partant de la ligne d'entaille (3) ou d'une partie de celle-ci — dans le plan de séparation (2) jusqu'à une surface résiduelle (4), lequel procédé est caractérisé en ce que, à la suite de cette coupure partielle, deux forces de compression (5) de valeurs identiques, dirigées en sens contraire l'une de l'autre, sont appliquées selon une ligne d'action concordante, à l'extérieur des objets (1) perpendiculairement au plan de séparation (2) dans le plan de séparation (2) prévu, pendant le processus de refroidissement ou pendant une interruption de ce dernier en des emplacements tels que leur action dans le plan de séparation (2) se concentre essentiellement sur une zone qui est en dehors de la surface résiduelle (4) non séparée pour fendre les objets (1) le long de la surface résiduelle (4).

2. Procédé selon la revendication 1, caractérisé en ce que les forces de compression (5) sont appliqués aux objets (1) à couper pendant une interruption du processus de refroidissement.

3. Procédé selon la revendication 1 ou 2, caractérisé en ce que les objets à couper (1) sont refroidis, après l'application de forces de compression (5) extérieures, à une température du milieu de refroidissement qui est inférieure à celle du début du processus de refroidissement.

4. Procédé selon la revendication 2 ou éventuellement la revendication 3, caractérisé en ce que les objets à couper (1) sont réchauffés symétriquement par rapport au plan de séparation prevu (2) pendant l'interruption du processus de refroidissement.

5. Procédé selon l'une des revendications 1 à 4, caractérisé en ce que la température de départ des objets à couper (1) est supérieure à la température ambiante.

6. Procédé selon la revendication 5, caractérisé en ce que la température du milieu de refroidissement est égale ou à peu près égale à la température ambiante.

7. Procédé selon l'une des revendications 1 à 6, caractérisé en ce que le refroidissement des objets à couper (1) a lieu par immersion et séjour temporaire dans la le liquide d'un bain de refroidissement.

8. Procédé selon l'une des revendications 1 à 7, caractérisé en ce que le déroulement dans le temps du processus de séparation des objets (1) est surveillé par des dispositifs optiques et en ce que les informations qui peuvent en être obtenues sont utilisées pour déterminer l'endroit et l'instant de l'application des forces de compression extérieures (5).

9. Procédé selon l'une des revendications 1 à 8, caractérisé en ce que les forces de compression extérieures (5) sont produites pneumatiquement, hydrauliquement ou par des vis, les dispositifs pour la production de ces forces de compression (5) pouvant simultanément être réalisés en tant que support des objets (1).

**Fig. 1**

3

2

1

**Fig. 2**

2

4

1

**Fig. 3**

2

4

1

5

5